# EUROPEAN PATENT APPLICATION

(11) **EP 1 191 359 A1**
(43) Date of publication of application: **27.03.2002**
(21) Application number: 01122323.7
(22) Date of filing: 18.09.2001
(51) Int. Cl.: G02B 5/18, G02B 5/32

(54) **Holographic beam splitter**

(30) Priority: 22.09.2000 JP 2000287804; 18.01.2001 JP 2001009975
(71) Applicant: FUJI ELECTRIC CO., LTD., Kawasaki-shi, Kanagawa 210-0856 (JP)
(72) Inventor: Suzuki, Yoshiyuki c/o Fuji Electric Co.,Ltd.,, Kanagawa 210-0856 (JP); Saito, Tetsuya c/o Fuji Electric Co., Ltd.,, Kanagawa 210-0856 (JP); Kobayashi, Takeshi c/o Fuji Electric Co., Ltd.,, Kanagawa 210-0856 (JP); Tanaka, Hideyuki c/o Fuji Electric Co., Ltd.,, Kanagawa 210-0856 (JP); Kawai, Shigeru, Tokyo 206-0804 (JP)
(74) Representative: DIEHL GLAESER HILTL & PARTNER

(57) **Abstract**

A diffractive optical element, which splits one input light into a plurality of output lights, has a phase difference distribution P(x) represented by the following equation 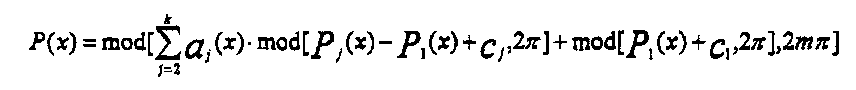 (where x is a vector representing a position on a diffractive optical element, π is the ratio of the circumference of a circle to its diameter, m is a natural number, k is an integer equal to or larger than 2, aj is a function which satisfies 0<aⱼ,1, cⱼ is a constant, and mod[A,B] is a function which represents the remainder obtained by dividing A by B), based on an assumption that a phase difference distribution representing a capability converting the input light into an ith output light is Pᵢ(x). As a result, a diffractive optical element, with which higher diffractive efficiency than that of a conventional technique can be obtained even in the case where an input light is split in many directions at an arbitrary split ratio by using a plurality of diffractive lights, can be implemented.

## Description

### Background of the Invention

### Field of the Invention

The present invention relates to a diffractive optical element, and more particularly, to a diffractive optical element with which high diffractive efficiency that is suitable for an optical interconnection used for split-coupling between optical fibers can be obtained.

### Description of the Related Art

As one method improving the diffractive efficiency of a diffractive optical element, blazing is conventionally known. The blazing is described in detail, for example, by G. J. Swanson, "Binary Optics Technology: The Theory and Design of Multi-level Diffractive Optical Elements", MIT Lincoln Lab. Technical Report 854 (1989).

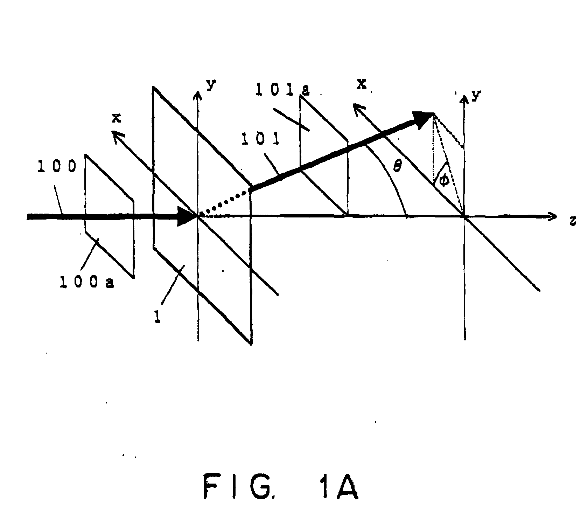

A blazed diffractive optical element is exemplified in Fig. 1A. A diffractive optical element 1 shaped like a plane is placed on a xy plane of an orthogonal coordinate system. When a plane wave 100 that proceeds in a z axis direction enters, it passes through the diffractive optical element 1, is converted into a plane wave 101, and output. The proceeding direction of the plane wave 101 is assumed to be a direction where an angle formed by a zx plane is within the plane of ϕ, and an angle formed by the z axis is θ. The capability of a diffractive optical element can be represented by a phase difference distribution. If the phase difference distribution of the diffractive optical element is defined with (a phase distribution of an output light) - (a phase distribution of an input light) on the diffractive optical element, the phase distribution difference representing the above described deflection capability becomes Pₒ represented by the following equation 5 based on the assumption that the value at the origin is 0. Here, assume that λ is the wavelength of input and output lights, and the refractive index of a medium in the periphery of the element is 1.${\text{P}}_{\text{o}} \text{(x, y) =- sinθ(x cosφ+y sinφ) · 2 π/λ}$

Namely, the phase difference of the above described P₀ is added to the plane wave 100 that enters the diffractive optical element, so that the plane wave 100 results in the plane wave 101 being an output light. In the meantime, a phase difference distribution P_{b} of the blazed diffractive optical element 1 is represented by the following equation 6.${\text{P}}_{\text{b}} \text{(x, y) =mod [- sinθ (x cosφ+y sinφ) · 2 π/λ, 2π]}$ where π is the ratio of the circumference of a circle to its diameter, and mod[A,B] is a function which represents the remainder obtained by dividing A by B.

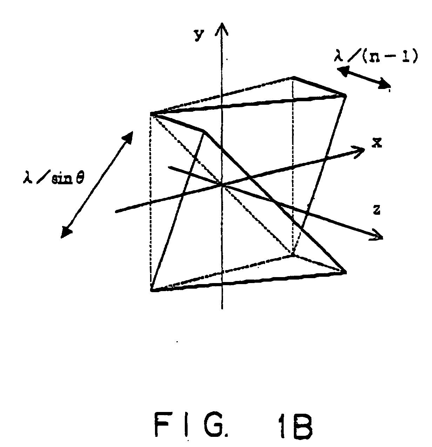

For the blazing, the fact that wavefronts whose phases are different by an integer multiple of 2π are equivalent is used. Namely, even if the phase difference distribution P_{b} whose phase shifts by a -u multiple of 2π from the original phase difference distribution P₀ is added to an input light in a portion where a phase difference from a reference position on the element is larger than a u multiple of 2π and equal to or smaller than a (u+1) multiple for the original phase difference distribution P_{0,} an output light having the same wavefront as that of an output light obtained from the original phase difference distribution P₀. The diffractive optical element 1 having the blazed phase difference distribution P_{b} is made of, for example, a material having a refractive index n, and implemented by an element having a thickness distribution D₀ in the z axis direction, which is represented by the following equation 7. This shape is exemplified in Fig. 1B.${\text{D}}_{\text{0}} \text{(x, y) =mod [-sinθ (x cosφ+y sinφ) · 2 π/λ, 2π] × (λ/2π)/(1-n)}$

In this example, the input side of the diffractive optical element 1 is a plane parallel to the xy plane. In the meantime, the output side has a shape such that its cross section is like a sawtooth where concave and convex steps having a period P of λ/sinθ and a size of λ/(n-1) are repeatedly arranged. Shown in Fig. 1B is the surface shape of one period, and this shape is arranged by being spread all over the plane of the output side of the diffractive optical element 1.

Ideally, the above described diffractive optical element 1 only modulates the phase of an input light, and does not attenuate its amplitude. Therefore, no loss occurs, and the diffractive efficiency of an output light is 100 percent. Actually, however, a loss somewhat occurs due to scattering in a step difference.

As described above, high diffractive efficiency implemented by blazing is effective for the case where only a diffractive light of a particular order, such as a diffractive optical element which deflects an input light, is used. In the meantime, to a diffractive optical element using a plurality of diffractive lights having different orders, for example, a diffractive optical element used for an optical split-coupler that inputs a light output from one optical to a plurality of optical fibers, blazing with which an optical intensity is concentrated on a diffractive light of a particular order is not applicable. As a method implementing high diffractive efficiency in the above described case, only a method that is applicable under a particular condition, such as a dammann grating, etc., is known.

### Summary of the Invention

The present invention focuses on the above described problem of conventional techniques, and aims at implementing a diffractive optical element with which diffractive efficiency higher than that by the conventional techniques can be obtained even when a plurality of diffractive lights are used.

A diffractive optical element according to the present invention is a diffractive optical element that splits one input light into a plurality of output lights, and has a phase difference distribution P (x) represented by the following equation, based on the assumption that a phase difference distribution representing the capability for converting an input light into an ith output light is P₁(x). 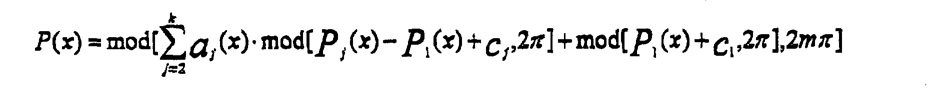 where x is a vector representing a position on a diffractive optical element, π is the ratio of the circumference of a circle to its diameter, m is a natural number, k is an integer equal to or larger than 2, aⱼ is a function which satisfies 0<aⱼ<1, cⱼ is a constant, and mod[A,B] is a function which represents the remainder obtained by dividing A by B.

### Brief Description of the Drawings

The present invention will become more apparent from the following description of the preferred embodiments, with reference to the accompanying drawings, in which:
Fig. 1A shows an optical system to which a diffractive optical element according to a conventional technique is applied;
Fig. 1B shows the surface shape of the diffractive optical element according to the conventional technique;
Fig. 2A shows an optical system to which a diffractive optical element according to a first preferred embodiment of the present invention is applied;
Fig. 2B shows an example of the surface shape of the diffractive optical element according to the first preferred embodiment;
Fig. 3 shows another example of the surface shape of the diffractive optical element according to the first preferred embodiment of the present invention;
Fig. 4 shows an optical system to which a diffractive optical element according to a second preferred embodiment of the present invention is applied;
Fig. 5 shows an optical system to which a diffractive optical element according to a third preferred embodiment according to the present invention is applied;
Figs. 6A and 6B show optical systems to which a diffractive optical element according to a fourth preferred embodiment of the present invention is applied;
Fig. 7 shows the distributions of the values of coefficients governing a split ratio in a phase difference distribution of the diffractive optical element according to the fourth preferred embodiment of the present invention;
Fig. 8 shows the distributions of the intensities of output lights of the diffractive optical element according to the fourth preferred embodiment of the present invention; and
Fig. 9 shows the distribution of the split ratio in the phase difference distribution according to the fourth preferred embodiment of the present invention.

### Description of the Preferred Embodiments

To achieve the above described aims, desired diffractive optical elements are obtained by using the inventions according to claims 1 to 4.

Namely, a diffractive optical element according to claim 1 is a diffractive optical element having a capability for splitting one input light into a plurality of output lights, and has a phase difference distribution P(x) represented by the above provided equation 1 based on the assumption that a phase difference distribution representing a capability for converting the input light into an ith output light is Pᵢ(x).

A diffractive optical element according to claim 2 is a transparent type of the diffractive optical element according to claim 1, whose surface shape D(x) is represented by the above provided equation 2, so that the phase difference distribution of the transparent type results in the above descried P(x).

A diffractive optical element according to claim 3 is a reflective type of the diffractive optical element according to claim 1, whose surface shape D'(x) is represented by the above provided equation 3, so that the phase difference distribution of the reflective type results in the above described P(x).

A diffractive optical element according to claim 4 is the diffractive optical element according to claim 1 having an even thickness t, whose refractive index distribution n' (x) is represented by the above provided equation 4, so that the phase difference distribution of the diffractive optical element results in the above described P(x).

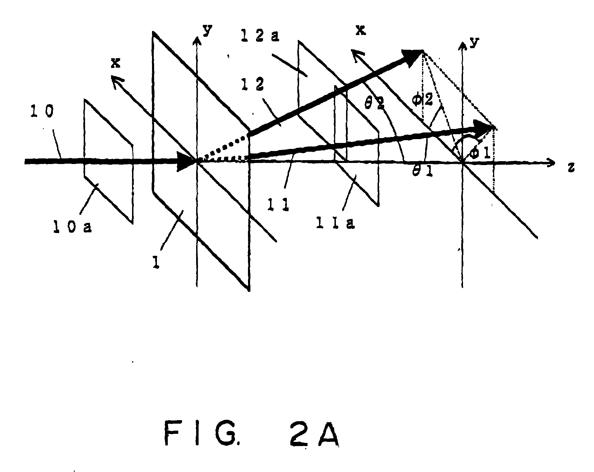

A diffractive optical element according to a preferred embodiment of the present invention is exemplified with reference to Fig. 2A.

Portions representing capabilities similar to those shown in the other drawings are denoted with the same reference numerals. A diffractive optical element 1 shown in Fig. 2A is shaped like a plane, and placed on a xy plane of an orthogonal coordinate system. Additionally, this element is of a transparent type, and has a phase difference distribution represented by P₁₀(x,y) indicated by the following equation 8.${\text{P}}_{\text{10}} {\text{(x, y) =mod [a}}_{\text{12}} {\text{· mod [P}}_{\text{12}} {\text{(x, y) - P}}_{\text{11}} {\text{(x, y), 2 π] +mod [P}}_{\text{11}} \text{(x, y), 2 π], 2 π]}$ where π is the ratio of the circumference of a circle to its diameter, a₁₂ is a constant which satisfies 0<a₁₂<1, and mod[A,B] is a function which represents the remainder obtained by dividing A by B.

P₁₁(x,y) and P₁₂(x,y), which are included in the above provided equation, are given as indicated by the following equation 9. Assume that the wavelength of input and output lights is λ.${\text{P}}_{\text{11}} \text{(x,y)=-sinθ1(x cosφ1+y sinφ1)·2π /λ.} {\text{P}}_{\text{12}} \text{(x, y) = - sin θ2 (x cos φ 2 + y sin φ 2 ) · 2 π /λ}$

Prior to the explanation of the action of the diffractive optical element 1, the nature that a blazed phase difference distribution normally comprises is described. As referred to in the explanation of the conventional techniques, the blazed phase difference distribution acts on an input light similarly to a phase difference distribution before being blazed. Additionally, if a blazed phase difference distribution whose phase difference size is reduced with a constant ratio is used, also a light which passes without being diffracted, namely, a diffractive light of the 0th order is obtained as well as an output light having the same wavefront as that of a diffractive light according to the original phase difference distribution that is not reduced. Assuming that the ratio of reducing the phase difference is a (0≤a≤1), a relative intensity I₁ of the diffractive light derived from the original phase difference distribution, and a relative intensity I₀ of the diffractive light of the 0th order with reference to the intensity of an input light are values represented by the following equation 10 in principle.${\text{I}}_{\text{1}} {\text{=sinc2(a-1), I}}_{\text{0}} \text{= sinc2 (a)}$ where sinc(x)≡sin(πx)/(πx).

P₁₁(x,y) and P₁₂(x,y), which appear in the phase difference distribution P₁₀(x,y), represent phase difference distributions of the capability for deflecting and outputting an input light, similar to the above described phase difference distribution P₁₀(x, y) represented by the equation 5 provided earlier. Namely, P₁₁(x,y) represents the phase difference distribution that deflects and converts a plane wave 10 into a plane wave 11, and outputs the plane wave 11, when the plane wave 10 which proceeds in the z axis direction enters the diffractive optical element 1. The proceeding direction of the plane wave 11 is a direction where an angle formed by a zx plane is on a ϕ1 plane, and an angle formed by the z axis is θ1. In the meantime, P₁₂(x,y) represents a phase difference distribution that deflects and converts the plane wave 10 into a plane wave 12, when the plane wave 10 which proceeds in the z axis direction enters the diffractive optical element 1. The proceeding direction of the plane wave 12 is a direction where an angle formed by the zx plane is on a ϕ2 plane, and an angle formed by the z axis is θ2.

The phase difference distribution P₁₀(x,y) of the diffractive optical element 1 acts as follows as a whole.

First of all, a phase difference distribution -P₁₁(x,y) is represented by the following equation 11, and represents the capability for deflecting the plane wave 10 which proceeds in the z axis direction in a symmetric direction of the deflection by the phase difference distribution P₁₁(x,y) with respect to the z axis, for converting the deflected wave into a plane wave 11' (not shown), and for outputting the plane wave 11', when the plane wave 10 enters as is evident from the contrast with P₁₁(x,y) represented by the equation 9.${\text{-P}}_{\text{11}} \text{(x,y)=-sin(-θ2)(x cos θ2+y sin θ2)· 2π/λ}$

Accordingly, a portion mod[P₁₂(x,y)-P₁₁(x,y), 2 π] within the equation 8 represents a distribution obtained by blazing the phase difference distribution which simultaneously makes the deflection by the phase difference distribution P₁₂(x,y) and that by the phase difference distribution -P₁₁(x,y) act. The first portion a₁₂·mod[P₁₂(x,y)- P₁₁(x,y), 2π] within the equation 8, which includes the above described portion, represents a phase difference distribution which has an action for splitting the plane wave 10 which proceeds in the z axis direction into a diffractive light and a diffractive light of the 0th order according to the above described phase difference distribution, and for outputting these lights when the plane wave 10 enters. As explained earlier, the relative intensities of these output lights are determined according to the value of a₁₂. Additionally, the second portion mod[P₁₁(x,y), 2π] within the equation 8 represents a distribution obtained by blazing the phase difference distribution P₁₁(x,y).

Accordingly, the phase difference distribution P₁₀(x,y) represented by the equation 8 is a distribution obtained by blazing the phase difference distribution which simultaneously makes the splitting and the deflection, which are represented by the above described first portion, and the deflection represented by the second portion act. When the plane wave 10 which proceeds in the 2 axis direction enters the diffractive optical element 1 having this phase difference distribution, the second portion acts on the diffractive light of the 0th order in the first portion, so that an output light deflected according to the phase difference distribution P₁₁(x,y) can be obtained. Additionally, if the second portion acts on the original diffractive light in the first portion, the deflection of the phase difference distribution -P₁₁(x, y) included in the first portion and the deflection of the phase difference distribution P₁₁(x,y) included in the second portion cancel each other out, so that an output light deflected according to the phase difference distribution P₁₂(x, y) can be obtained.

In consequence, the action of the phase difference distribution P₁₀(x,y) simultaneously performs the deflection by the phase difference distribution P₁₁(x, y), and that by the phase difference distribution P₁₂(x,y), and the split ratio of intensities of their output lights is determined according to the coefficient a₁₂.

A relative intensity I₁₁ of an output light 11 and a relative intensity I₁₂ of an output light 12 with reference to the intensity of the input light 10 are values represented by the following equation 12 in a similar manner as in the above described case represented by the equation 10.${\text{I}}_{\text{11}} {\text{=sinc2(a12), I}}_{\text{12}} \text{=sinc2(a12-1)}$

The phase difference distribution P₁₀(x,y) has a surface shape represented by a thickness distribution D₁₀ in the z axis direction, which is represented by the following equation 13, and can be implemented by a diffractive optical element 1 made of a material having a refractive index n. Here, assume that the refractive index of a medium in the periphery of the diffractive optical element 1 is ns.${\text{D}}_{\text{10}} {\text{(x, y) = 1/(ns-n) · (λ/2π) · P}}_{\text{10}} \text{(x, y)}$

If the refractive index of the medium in the periphery of the diffractive optical element 1 can be regarded as 1 like air, the surface shape is represented by a thickness distribution D₁₀ₐ in the z axis direction represented by the following equation 14.${\text{D}}_{\text{10a}} {\text{(x, y) = 1 / (1-n) · (λ/2π) · P}}_{\text{10}} \text{(x, y)}$

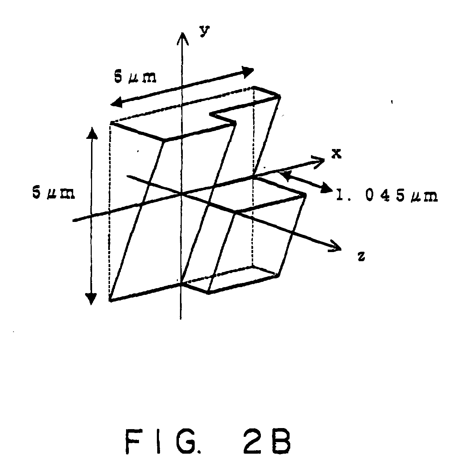

An example of this shape is shown in Fig. 2B. This example is the case where n=1.5, λ=523 nm, β1=8.50, ϕ1=135°, θ2=8.50, and θ=45° in the above provided equation. The input side of the diffractive optical element is a plane parallel to a xy plane, and a surface having a shape shown in Fig. 2B is arranged on the output side. A range of a 5-µm square is shown in this figure. On the surface on the output side of the diffractive optical element, the same shape as this range is repeatedly arranged in the x and the y directions.

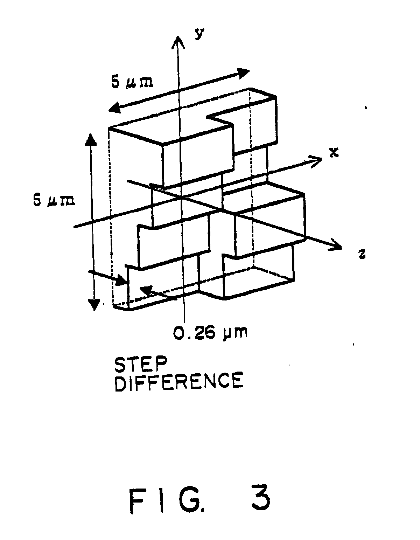

Since the surface shape shown in Fig.2B has a size on the order of an optical wavelength, it is difficult to implement this shape with high precision by means of current processing technology in many cases. Therefore, a method applying a manufacturing technique of an integrated circuit, and making such a surface shape by approximating the shape to a staircase is used. An example of applying this method to the surface shape of Fig. 2B is shown in Fig. 3. In this example, the surface shape is approximated to a staircase having a depth of 4 steps arranged at regular intervals. A diffractive optical element manufactured with this method is called binary optics.

Furthermore, the phase difference distribution P₁₀(x,y) can be also implemented by a diffractive optical element 1 that has an even thickness t, and has a refractive index distribution n (x, y) represented by the following equation 15.${\text{n (x, y) =n}}_{\text{a}} \text{- (l/t) · (λ/2π) · P (x, y)}$ where nₐ indicates a reference refractive index.

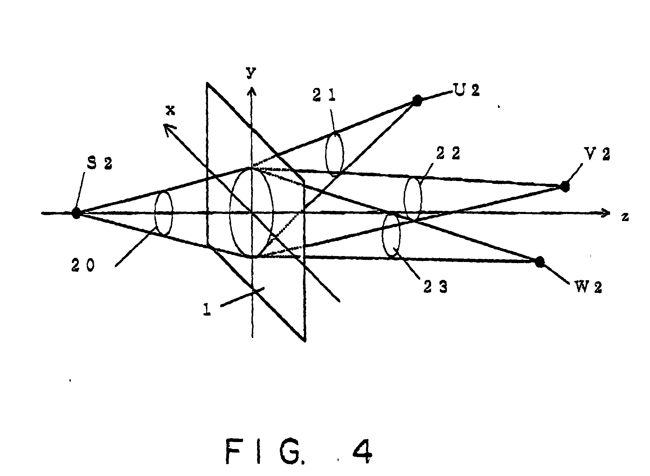

A diffractive optical element according to another preferred embodiment of the present invention is explained with reference to Fig.4.

A diffractive optical element 1 shown in Fig.4 is shaped like a plane, and placed on a xy plane of an orthogonal coordinate system. Additionally, the diffractive optical element 1 is of a transparent type, and has a phase difference distribution represented by P₂₀(x) indicated by the following equation 16.${\text{P}}_{\text{20}} {\text{(x) =mod[a}}_{\text{22}} {\text{· mod [P}}_{\text{22}} {\text{(x) -P}}_{\text{21}} {\text{(x) +c}}_{\text{2}} {}_{\text{2}} {\text{, 2π] + a}}_{\text{23}} {\text{· mod [P}}_{\text{23}} {\text{(x)-P}}_{\text{21}} {\text{(x) +c}}_{\text{23}} {\text{, 2 π] + mod [P}}_{\text{21}} {\text{(x) +c}}_{\text{21}} \text{, 2π], 2π]}$ where x is a vector representing a position on the diffractive optical element, c₂₁, c₂₂, and c₂₃ are constants, and a₂₂ and a₂₃ are constants that satisfy 0<a₂₂, and a₂₃<1.

P₂₁(x), P₂₂(x), and P₂₃(x) within the above provided equation are given as indicated by the following equation 17. λ is the wavelength of input and output lights, and x₀ is a position vector indicating a reference position arranged on the diffractive optical element 1. x₂₀, x₂₁, x₂₂, and x₂₃ are position vectors of points S2, U2, V2, and W2 in Fig. 4 respectively. The point S2 is located on the negative side of the z axis in Fig. 4, whereas the points U2, V2, and W2 are located on the positive side of the z axis.${\text{P}}_{\text{21}} {\text{(x)=(|x}}_{\text{21}} {\text{-x|+|x-x}}_{\text{20}} {\text{|-x}}_{\text{21}} {\text{-x}}_{\text{0}} {\text{|-|x}}_{\text{0}} {\text{-x}}_{\text{20}} \text{|) · 2 π/λ,} {\text{P}}_{\text{22}} {\text{(x) = (|x}}_{\text{22}} {\text{-x|+|x-x}}_{\text{20}} {\text{|-|x}}_{\text{22}} {\text{-x}}_{\text{0}} {\text{|-|x}}_{\text{0}} {\text{-x}}_{\text{20}} \text{|) · 2π/λ,} {\text{P}}_{\text{23}} {\text{(x) = (|x}}_{\text{23}} {\text{-x|+|x-x}}_{\text{20}} {\text{|-|x}}_{\text{22}} {\text{-x}}_{\text{0}} {\text{|-|x}}_{\text{0}} {\text{-x}}_{\text{20}} \text{|) · 2π/λ}$

For P₂₁(x), |x₂₁-x|+|x-x₂₀| and |x₂₁-x₀|+|x₀-x₂₀| respectively represent an optical path length from the point S2 to the point U2 via the point x on the diffractive optical element 1, and an optical path length from the point S2 to the point U2 via the reference position x₀ of the diffractive optical element 1. Accordingly, P₂₁(x) represents a phase difference distribution that deflects light having a wavelength λ, which passes through the point S2, diverges, and enters the diffractive optical element 1, and gives an output light which converges to the point U2. Similarly, P₂₂ (x) represents a phase difference distribution that deflects an input light from the point S2 to an output light which proceeds to the point V2, and P₂₃(x) represents a phase difference distribution that deflects to an output light which proceeds to the point W2.

The equation 16 representing the phase difference distribution P₂₀(x) has a structure similar to that of the above described phase difference distribution P₁₀(x,y). Accordingly, the action of the diffractive optical element 1 having the phase difference distribution P₂₀(x) simultaneously performs the actions of the phase difference distributions included in the equation 16. Namely, the deflection by the phase difference distribution P₂₁(x), the deflection by the phase difference distribution P₂₂(x), and the deflection by the phase difference distribution P₂₃(x) are simultaneously caused. Therefore, when an input light 20 having a wavelength λ, which passes through the point S2 and diverges, enters the diffractive optical element 1, it is split and deflected. As a result, an output light 21 which converges to the point U2, and an output light 22 which converges to the point V2, and an output light 23 which converges to the point W2 are output.

An intensity ratio of the output lights is a ratio according to the values of a₂₂ and a₂₃ within the equation 16. If a₂₂>a₂₃, the intensity of the output light 22 is higher than that of the output light 23. Inversely, if a₂₂<a₂₃, the intensity of the output light 23 is higher than that of the output light 22. If a₂₂+a₂₃ is a value close to 0, the intensity of the output light 21 is higher than those of the other lights. If a₂₂+a₂₃ is a value close to 2, the intensity of the output light 21 is lower than those of the other lights.

The phase difference distribution P₂₀(x,y) has a surface shape represented by a thickness distribution D₂₀ₐ in the z axis direction, which is represented by the following equation 18, and can be implemented by a diffractive optical element 1 made of a material having a refractive index n. Here, assume that the refractive index of a medium in the periphery of the diffractive optical element 1 is 1.${\text{D}}_{\text{20a}} {\text{(x, y) =1/(1-n) · (λ/2π)·P}}_{\text{20}} \text{(x, y)}$

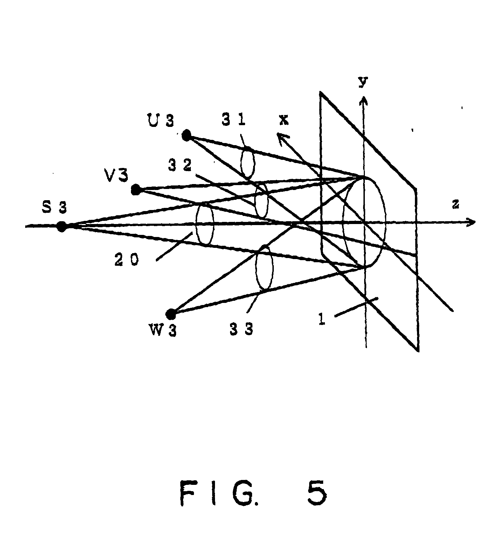

A diffractive optical element according to a further preferred embodiment of the present invention is explained with reference to Fig. 5.

A diffractive optical element shown in Fig.5 is shaped like a plane, and placed on a xy plane of an orthogonal coordinate system. Additionally, the diffractive optical element 1 is of a reflective type, and has a phase difference distribution represented by P₃₀(x) indicated by the following equation 19.${\text{P}}_{\text{30}} {\text{(x) = mod [a}}_{\text{32}} {\text{· mod [P}}_{\text{32}} {\text{(x) - P}}_{\text{31}} {\text{(x) + c}}_{\text{3}} {}_{\text{2}} {\text{· 2π] + a}}_{\text{33}} {\text{· mod [P}}_{\text{33}} {\text{(x) - P}}_{\text{31}} {\text{(x) +c}}_{\text{33}} {\text{, 2π] +mod [P}}_{\text{31}} {\text{(x) + c}}_{\text{31}} \text{, 2π], 2 π]}$ where x is a vector representing a position on the diffractive optical element, c₃₁, c₃₂, and c₃₃ are constants, and a₃₂ and a₃₃ are constants which satisfy 0<a₃₂, and a₃₃<1.

P₃₁ (x), P₃₂(x), and P₃₃(x) within the above provided equation are given as indicated by the following equation 20. λ is the wavelength of input and output lights, and x₀ is a position vector representing a reference position arranged on the diffractive optical element 1. x₃₀, x₃₁, x₃₂, and x₃₃ are position vectors of points S3, U3, V3, and W3 in Fig. 5 respectively. All of the 4 points are located on the negative size of the z axis.${\text{P}}_{\text{31}} {\text{(x) = ( | x}}_{\text{31}} {\text{- x | + | x - x}}_{\text{30}} {\text{| - | x}}_{\text{31}} {\text{- x}}_{\text{0}} {\text{| - | x}}_{\text{0}} {\text{-x}}_{\text{30}} \text{|) · 2 π/λ,} {\text{P}}_{\text{32}} {\text{(x) = ( |x}}_{\text{32}} {\text{-x|+|x-x}}_{\text{30}} {\text{| - |x}}_{\text{31}} {\text{-x}}_{\text{0}} {\text{|-| x}}_{\text{0}} {\text{-x}}_{\text{30}} \text{|) · 2 π/λ,} {\text{P}}_{\text{33}} {\text{(x) = (| x}}_{\text{33}} {\text{-x | + | x-x}}_{\text{30}} {\text{| - | x}}_{\text{31}} {\text{-x}}_{\text{0}} {\text{| - | x}}_{\text{0}} {\text{-x}}_{\text{30}} \text{|) · 2 π/λ}$

The equation representing the phase difference distribution P₃₀ (x) has exactly the same structure as that in the case of the phase difference distribution P₂₀(x). Therefore, also the relationship between the phase difference distribution P₃₀ (x) and the phase difference distributions P₃₁ (x), P₃₂(x) and P₃₃(x) is similar to that in the case of the phase difference distribution P₂₀(x). Accordingly, the diffractive optical element 1 having the phase difference distribution P₃₀(x) has an action which simultaneously causes deflection by the phase difference distribution P₃₁(x), deflection by the phase difference distribution P₃₂(x), and deflection by the phase difference distribution P₃₃(x). Namely, when an input light 30 having a wavelength λ, which passes through the point S3 and diverges, enters the diffractive optical element 1, it is split and deflected. As a result, an output light 31 which converges to the point U3, an output light 32 which converges to the point V3, and an output light 33 which converges to the point W3 are output. Also the point that the intensity ratio of the output lights is a ratio according to the values of a₃₂ and a₃₃ included in the equation 19 is similar to the case of the phase difference distribution P₂₀(x).

A phase difference distribution P₃₀(x,y) can be implemented by a diffractive optical element 1 having a surface represented by a shape distribution D'₃₀ₐ in the z axis direction, which is indicated by the following equation 21. Here, the refractive index of the medium in the periphery of the diffractive optical element 1 is 1.${\text{D'}}_{\text{30a}} {\text{(x, y) =-1/2 · (λ/2π) · P}}_{\text{30}} \text{(x, y)}$

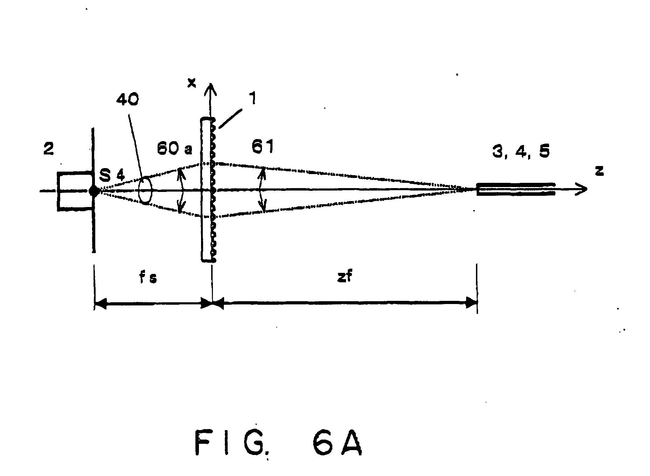

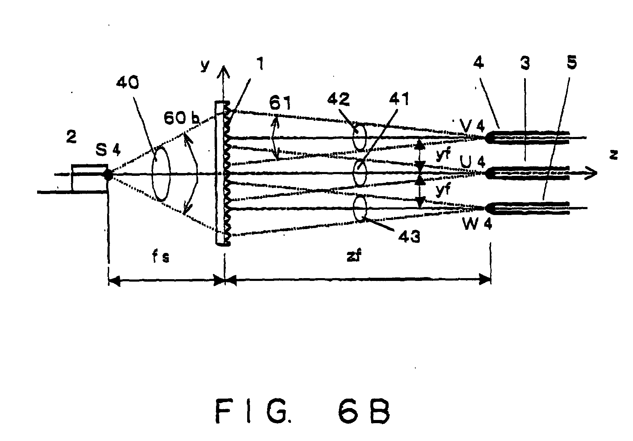

A diffractive optical element according to a still further preferred embodiment of the present invention is explained with reference to Figs. 6A and 6B.

A diffractive optical element 1 shown in Figs. 6A and 6B is shaped like a plane, and placed on a xy plane of an orthogonal coordinate system. Additionally, the diffractive optical element 1 is of a transparent type, and has a phase difference distribution represented by P₄₀(x) indicated by the following equation 22.${\text{P}}_{\text{40}} {\text{(x) =mod [a}}_{\text{42}} {\text{(x) · mod [P}}_{\text{42}} {\text{(x) -P}}_{\text{41}} {\text{(x) + c}}_{\text{42}} {\text{, 2π] + a}}_{\text{43}} {\text{(x) · mod [P}}_{\text{43}} {\text{(x) - P}}_{\text{41}} {\text{(x) + c}}_{\text{43}} {\text{, 2 π]+mod [P}}_{\text{41}} {\text{(x) + c}}_{\text{41}} \text{, 2π], 2π]}$ where x is a vector representing a position on the diffractive optical element, c₄₁, c₄₂, and c₄₃ are constants, and a₄₂(x) and a₄₃(x) are functions which satisfy 0<a₄₂(x) and a₄₃(x)<1.

P₄₁(x), P₄₂(x), and P₄₃(x) within the above provided equation are given as indicated by the following equation 23. Note that λ is the wavelength of input and output lights.${\text{P}}_{\text{41}} {\text{(x)=(|x}}_{\text{41}} {\text{-x|+|x-x}}_{\text{40}} {\text{|-|x}}_{\text{41}} {\text{-x}}_{\text{0}} {\text{|-|x}}_{\text{0}} {\text{-x}}_{\text{4}} \text{0|) · 2π/λ,} {\text{P}}_{\text{42}} {\text{(x) = (|x}}_{\text{42}} {\text{-x|+|x-x}}_{\text{40}} {\text{|-|x}}_{\text{41}} {\text{-x}}_{\text{0}} {\text{|-|x}}_{\text{0}} {\text{-x}}_{\text{40}} \text{|) · 2π/λ,} {\text{P}}_{\text{43}} {\text{(x)=(|x}}_{\text{43}} {\text{-x| + |x-x}}_{\text{40}} {\text{|-|x}}_{\text{41}} {\text{-x}}_{\text{0}} {\text{|-|x}}_{\text{0}} {\text{-x}}_{\text{40}} \text{|) · 2π/λ}$

Additionally, x₀ within the above provided equation is a position vector indicating a reference position arranged on the diffractive optical element 1. x₄₀, x₄₁, x₄₂, and x₄₃ are position vectors of points S4, U4, V4, and W4 in Figs. 6A and 6B respectively, and have values represented by the following equation 24.${\text{x}}_{\text{0}} {\text{= (0, 0, 0), x}}_{\text{40}} {\text{=(0, 0, - f}}_{\text{5}} {\text{), x}}_{\text{41}} {\text{= (0, 0, z}}_{\text{f}} {\text{), x}}_{\text{42}} {\text{=(0, y}}_{\text{f}} {\text{, z}}_{\text{f}} {\text{), x}}_{\text{43}} {\text{=(0, - y}}_{\text{f}} {\text{, z}}_{\text{f}} \text{)}$

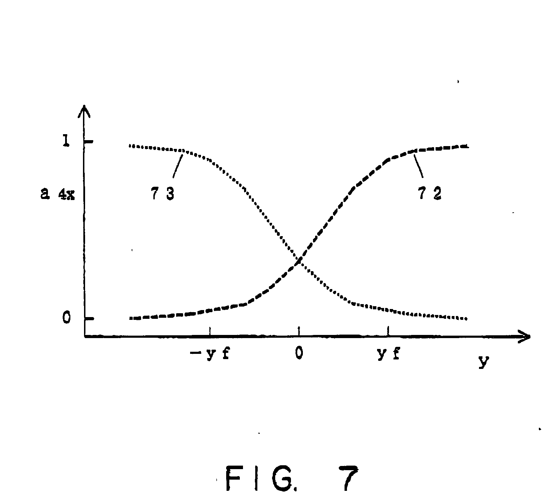

fₛ, y_{f}, and z_{f} are positive constants. Therefore, the point S4 is located on the negative side of the z axis in Fig. 4, whereas the points U4, V4, and W4 are located on the positive side of the z axis. Additionally, the values of a₄₂(x) and a₄₃ (x) indicated by the equation 22 vary in the y axis direction as indicated by 72 and 73 of Fig. 7.

Since most of the equation 22 which represents the phase difference distribution P₄₀(x) has the same structure as that in the case of the above described phase difference distribution P₂₀(x) or P₃₀(x), its action is almost equivalent. Namely, the diffractive optical element 1 having the phase difference distribution P₄₀(x) has an action which simultaneously causes deflection by the phase difference distribution P₄₁(x), deflection by the phase difference distribution P₄₂(x), and deflection by the phase difference distribution P₄₃(x). That is, when an input light 40 having a wavelength λ, which passes through the point S4 and diverges, enters the diffractive optical element 1, it is split and deflected. As a result, an output light 41 which converges to the point U4, and an output light 42 which converges to the point V4, and an output light 43 which converges to the point W4 are output. In the meantime, for the phase difference distribution P₄₀ (x), the point that the values of a42(x) and a43(x), which govern the relative intensities of output lights against an input light, vary according to a position on the diffractive optical element 1 is different from the phase difference distribution P₂₀(x) or P₃₀(x).

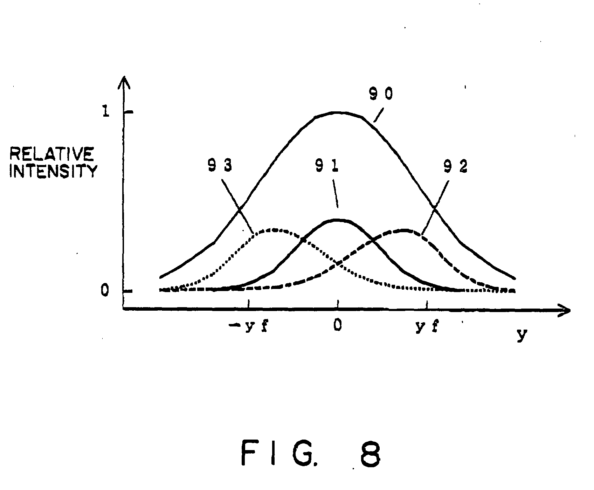

As shown in Figs. 6A and 6B, a light emitting point of a light source 2 configured by a semiconductor laser is arranged at the point S4, and end faces of optical fibers 3, 4, and 5 are respectively arranged at the points U4, V4, and W4. An output light 40 from the light source 2 has an intensity distribution 90 represented by a Gaussian distribution, which has a peak in the middle as shown in Fig. 8. Normally, as shown in Figs. 6A and 6B, a spread angle 61 of an input light that can be coupled to an optical fiber is symmetric with respect to an axis. In the meantime, a spread angle 60 of an output light from a semiconductor laser is larger than the spread angle of an input light that can be coupled to an optical fiber, and its distribution form is not symmetric with respect to an axis. In the examples shown in Figs. 6A and 6B, the light source 2 is arranged so that a spread angle 60b of the output light from the semiconductor laser in the y axis direction becomes larger than a spread angle 60a in the x axis direction.

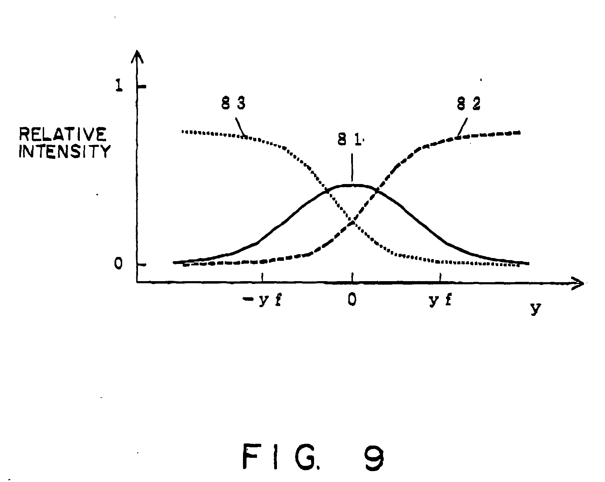

Relative intensities of output lights 41, 42, and 43 against an input light when the input light to the diffractive optical element 1 is split and output are determined according to the values of a₄₂ (x) and a₄₃(x) as indicated by 81, 82, and 83 in Fig. 9. Accordingly, intensity distributions of the output lights 41, 42, and 43 are implemented as products of the distributions indicated by 91, 92, and 93 in Fig. 8. The spread angles of these output lights take a shape analogous to the spread angle of an input light that can be coupled to an optical fiber, and the output lights 41, 42, and 43 are respectively coupled to optical fibers 3, 4, and 5 with small loss. If the case where a split ratio of the diffractive optical element 1 for the output lights is even regardless of a position is considered as a comparison, the intensity distributions of the output lights from the diffractive optical element 1 maintain a shape of the intensity distribution of the output light from the light source. Therefore, their spread angles do not match that of the input light that can be coupled to the optical fiber, leading to a degradation in a loss ratio at which a light is not coupled to an optical fiber and becomes a loss.

The present invention is not limited to the case where one input light is split into two or three, and applicable also to the case where one input light is split into 4 or more according to the value of k within an equation 1 recited in claim 1. Additionally, all the diffractive optical elements according to the above described preferred embodiments are shaped like a plane. However, the present invention is not limited to a plane, and is also applicable to a diffractive optical element having, for example, a spherical or aspherical surface, a curved plane regardless of whether or not it is symmetric with respect to an axis.

As described above, according to the present invention, it is possible to implement a diffractive optical element with which diffractive efficiency higher than that by conventional techniques can be obtained, even if an input light is split in many directions at an arbitrary split ratio by using a plurality of diffractive lights.

## Claims

1. A diffractive optical element (1) splitting one input light(11) into a plurality of output lights(10), comprising:
a phase difference distribution P(x) represented by an equation 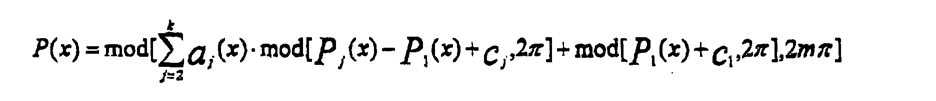 (where x is a vector representing a position on the diffractive optical element (1), π is the ratio of the circumference of a circle to its diameter, m is a natural number, k is an integer equal to or larger than 2, aⱼ is a function which satisfies 0<aⱼ<1, cⱼ is a constant, and mod[A,B] is a function which represents a remainder obtained by dividing A by B), based on the assumption that a phase difference distribution representing a capability converting the input light(11) into an ith output light(10) is Pᵢ(x).

2. The diffractive optical element(1) according to claim 1, wherein
a surface shape D(x) of a transparent type of the diffractive optical element(1) is represented by an equation${\text{D (x) =1/(n}}_{\text{s}} \text{-n) · (λ/2π) · P (x)}$ (where n is a refractive index of a material of the diffractive optical element (1), nₛ is a refractive index of a medium in a periphery of the diffractive optical element(1), and λ represents a wavelength), so that a phase difference distribution of the transparent type results in the P(x).

3. The diffractive optical element(1) according to claim 1, wherein
a surface shape D' (x) of a reflective type of the diffractive optical element(1) is represented by an equation${\text{D' (x)=-(1/2n}}_{\text{s}} \text{) · (λ/2π) · P (x)}$ so that a phase difference distribution of the reflective type results in the P(x).

4. The diffractive optical element(1) according to claim 1, wherein
a refractive index distribution n(x) of the diffractive optical element (1) having an even thickness t is represented by an equation${\text{n (x) = n}}_{\text{s}} \text{- (1/t) · (λ/2π) · P (x)}$ (where nₛ indicates a reference refractive index), so that a phase difference distribution of the diffractive optical element(1) results in the P(x).
